(19) Europäisches Patentamt

European Patent Office

Office européen des brevets

(11) Publication number: 0 548 931 A1

# EUROPEAN PATENT APPLICATION

(21) Application number: 92121826.9

(22) Date of filing: 22.12.92

(51) Int. Cl.5: A01N 61/00

(30) Priority: 24.12.91 JP 341277/91

(43) Date of publication of application:
30.06.93 Bulletin 93/26

(84) Designated Contracting States:
AT BE DE DK ES FR GB IT NL PT SE

(71) Applicant: SUMITOMO CHEMICAL COMPANY, LIMITED
5-33, Kitahama 4-chome Chuo-ku
Osaka(JP)

(72) Inventor: Kasamatsu, Kiyoshi
3-9, Karibadai-5-chome
Nishi-ku, Kobe-shi(JP)
Inventor: Kanai, Takehiro
26-12, Sengencho-4-chome
Fuchu-shi(JP)
Inventor: Hatakoshi, Makoto
10-2-253, Sonehigashinocho-2-chome
Toyonaka-shi(JP)
Inventor: Inoue, Masao
14-7, Mefu-2-chome
Takarazuka-shi(JP)
Inventor: Oouchi, Haruka, Sanrejidensu
Kinryo
Higashihorikawa 403, 423, Tatetomidacho
Ichijo Agaru, Kamigyo-ku, Kyoto-shi(JP)

(74) Representative: Vossius & Partner
Siebertstrasse 4 P.O. Box 86 07 67
W-8000 München 86 (DE)

(54) Material for controlling pests.

(57) A material for controlling pests which contains a substrate such as papers, cloths, resins, rubbers, glasses and plates which substrate is colored to a color having properties of attracting pests and contains an insect growth regulator such as juvenile hormone-like compounds and chitin synthesis inhibitors, is used for reducing the damages to agricultural crops and the like by pests by sterilizing the pests and reducing their living density.

The present invention is for reducing the harm by pests, particularly the harm by such pests that damage agricultural crops, by sterilizing the pests and reducing their living density.

Hitherto, scattering of insecticides has widely been carried out to control pests. However, it is feared that excessive scattering of insecticides causes environmental pollution. Although a method using a pheromone trap has been applied for controlling certain pests, the method has not yet come to be generalized.

It is the object of the invention to provide an efficient method of attracting and controlling pests. This object could be achieved on the basis of the finding that the use of a material for controlling pests comprising a substrate which is colored to a color having properties of attracting pests and contains an insect growth regulator (hereinafter IGR) enables efficient attraction and controlling of pests.

The insect growth regulator used in the present invention includes various chemicals which can sterilize pests. Specifically, it includes juvenile hormone-like compounds and chitin synthesis inhibitors.

Typical examples of the juvenile hormone-like compounds are 4-phenoxyphenyl 2-(2-pyridyloxy)propyl ether [pyriproxyfen], ethyl 2-(4-phenoxyphenoxy)ethylcarbamate [fenoxycarb], isopropyl 11-methoxy-3,7,11-trimethyl-2,4-dodecadienoate [methoprene] and 4-chloro-2-(2-chloro-2-methylpropyl)-5-(6-iodo-3-pyridylmethoxy)-pyridazin-3(2H)-one.

Chitin synthesis inhibitors are exemplified by benzoylurea compounds such as 1-(4-chlorophenyl)-3-(2,6-difluorobenzoyl)urea [diflubenzuron], 1-[3,5-dichloro-4-(3-chloro-5-trifluoromethylpyridin-2-yloxy)-phenyl]-3-(2,6-difluorobenzoyl)urea [chlorofluazuron], 1-(3,5-dichloro-2,4-difluorophenyl)-3-(2,6-difluorobenzoyl)urea [teflubenzuron], 1-(4-trifluoromethoxyphenyl)-3-(2-chlorobenzoyl)urea [triflumuron], 1-[4-(2-chloro-4-trifluoromethylphenoxy)-2-fluorophenyl]-3-(2,6-difluorobenzoyl)urea [flufenoxuron], 1-[α-(4-chloro-α-cyclopropylbenzylidenaminoxy)-p-tolyl]-3-(2,6-difluorobenzoyl)urea [flucycloxuron], 1-[3,5-dichloro-4-(1,1,2,2-tetrafluoroethoxy)phenyl]-3-(2,6-difluorobenzoyl)urea [hexaflumuron], 1-[2-fluoro-4-(1,1,2,2-tetrafluoroethoxy)-phenyl]-3-(2,6-difluorobenzoyl)urea and 1-(2-fluoro-4-trifluoromethylphenyl)-3-(2,6-difluorobenzoyl)urea,and 2-tert-butylimino-3-isopropyl-5-phenyl-3,4,5,6-tetrahydro-2H-1,3,5-thiadiazin-4-one.

It is chiefly the pests damaging agricultural crops that are controlled by the present invention. Specific examples of the pests are whiteflies (Aleyrodidae) such as greenhouse whitefly (Trialeurodes vaporariorum), sweetpotato whitefly (Bemisia tabaci);

Hemiptera pests such as grape leafhopper (Arboridia apicalis), aphids; thrips (Thysanoptera) such as Thrips palmi, yellow tea thrips (Scirtothrips dorsalis), flower thrips (Frankliniella intonsa); Lepidoptera pests such as diamondback moth (Plutella xylostella), rice skipper (Parnara guttata); and Diptera pests such as melon fly (Dacus cucurbitae), fungus gnats (Mycetophilidae), legume leafminer (Liriomyza trifolii), onion maggot (Delia antigua).

The pests which damage agricultural crops are usually attracted to a color evoking the same sensation as produced by chromatic radiation having a wavelength falling within the approximate range of from 578 nm to 430 nm. Such a color includes yellow (578 to 573 nm), greenish yellow (573 to 569 nm), yellow green (569 to 558 nm), yellowish green (558 to 530 nm), green (530 to 498 nm), bluish green (498 to 493 nm), blue green (493 to 488 nm), greenish blue (488 to 483 nm), blue (483 to 467 nm) and purplish blue (467 to 430 nm).

Particularly, greenhouse whitefly, sweetpotato whitefly, grape leafhopper, yellow tea thrips, flower thrips, rice skipper, melon fly and legume leafminer can be very efficiently attracted to a yellow or greenish yellow color. Diamondback moth can be very efficiently attracted to a color including yellow, green and the intermediate colors therebetween. Also, thrips palmi can be attracted by a blue or white color, and onion maggot can be attracted by a pale blue or yellow color.

The material for controlling pests of the present invention can be produced by letting a suitable substrate support the above insect growth regulator (IGR) and, if necessary, suitable antioxidants, surface active agents and insect-attracting substances.

When IGR is a liquid, it is supported on the substrate as it is or after it has been dissolved in a suitable solvent. For facilitating the supporting of IGR itself or the solution thereof on the substrate, the viscosity of IGR or the solution thereof may be lowered, if necessary, by heating.

When IGR is a solid, it is liquefied by heating or dissolved in a suitable solvent and then supported on the substrate. Also in this case, the viscosity of liquefied IGR may be lowered, if necessary, by heating. Alternatively, the solid IGR may be pulverized into a fine powder and mixed with the substrate.

Further, IGR may be formulated into an oil-in-water emulsion, aqueous suspension, oil-in-oil emulsion or oily suspension and then supported on the substrate.

Specific examples of the solvents usable for dissolving IGR and supporting the resulting solution on the substrate are saturated aliphatic hydrocarbons (e.g. hexane, decane, tridecane, tetradecane, hexadecane and octadecane); unsaturated aliphatic hydrocarbons (e.g. 1-undecene and 1-heneicosene); aromatic hydrocarbons such as alkylbenzenes (e.g. xylene, ethylbenzene, octadecylbenzene and triethylbenzene), alkylnaphthalenes (e.g. dodecylnaphthalene and tridecylnaphthalene), "HISOL" SAS-296® (1-phenyl-1-xylylethane produced by Nippon Petrochemicals Co.), and "Solvesso" 100® and "Solvesso" 200® (Produced by Exxon Chemical Co.); halogenated hydrocarbons such as "Cereclor" S45® (a chlorinated paraffin produced by ICI); ketones (e.g. acetone, methyl ethyl ketone and cyclohexanone); alcohols (e.g. methanol, ethanol, butanol, pentadecanol, ethylene glycol, diethylene glycol, propylene glycol monomethyl ether and 2-ethoxyethanol); esters (e.g. ethyl acetate, dimethyl phthalate, methyl laurate, ethyl palmitate, octyl acetate, dioctyl succinate and didecyl adipate); carboxylic acids (e.g. oleic acid, capric acid and enanthic acid); glycol polymers (e.g. tetraethylene glycol, polyethylene glycol and polypropylene glycol); amides (e.g. dimethylformamide and diethylformamide); fats and oils (e.g. olive oil, soybean oil, rape seed oil, castor oil, linseed oil, cotton oil, palm oil, avocado oil and shark-liver oil); and mineral oils (e.g. machine oil).

Specific examples of the antioxidants are phenolic compounds (e.g. dibutylhydroxytoluene, butylhydroxyanisole, propyl gallate, hydroquinone and tocopherol); amines (e.g. alkanolamines); phospholipids (e.g. lecithin); acids (e.g. adipic acid and phosphoric acid); alcohols (e.g. sorbitol, glycerol and propylene glycol); oils and fats (e.g. guaiacum resin), gossypol and sesamol. The amount of the antioxidants added to the liquid IGR, the solution of liquid IGR or the solution of solid IGR is generally within the range of from 0.1 to 5.0% based on the liquid IGR, the solution of liquid IGR or the solution of solid IGR, although it varies depending upon the solvent when it is used. The amount of the antioxidants added to the solid IGR is also generally within the range of from 0.1 to 5.0% based on the material.

Specific examples of the surface active agents are surface active agents such as ethylene glycol derivatives, propylene glycol derivatives and sorbitol derivatives. The amount of the surface active agents added to the liquid IGR, the solution of liquid IGR or the solution of solid IGR is generally within the range of from 0.1 to 50% based on the liquid IGR, the solution of liquid IGR or the solution of solid IGR.

The pest-attracting substances include pheromone and extracts from plants.

Specific examples of the substrate are papers [e.g. wood free paper, chushitsu-shi (printing paper comprising 30% or less of ground pulp and 70% or more of chemical pulp), regenerated paper, art paper, synthetic paper, kraft paper, Kent paper, Japanese Paper, paraffin paper and tracing paper], cloths of natural fibers (e.g. cotton and silk), cloths of synthetic fibers (e.g. polyester fiber, acrylic fiber, polyolefin fiber, rayon and porous polyester fiber), non-woven fabrics (e.g. spun bonded fabric), polyolefin resins (e.g. polyethylene and polypropylene), polyamide resins (e.g. nylon), synthetic resins (e.g. polyester resin, ethylene-acrylate copolymer resin, ethylene-methacrylate copolymer resin, ethylene-vinyl acetate copolymer resin, polyvinyl chloride resin and polyvinylidene chloride resin), rubbers (e.g. natural rubber, polyisoprene rubber, styrene-butadiene rubber, ethylene-propylene rubber) glass, silica, plate, nets woven of natural or synthetic fibers and metal plates. These substrates are shaped into various forms such as cloths, sheets, nets, plates, rods, cylinders and tapes by various processing techniques and then used.

These substrates are colored with suitable coloring materials to a color having properties of attracting pests. Specific examples of the coloring materials used are inorganic pigments, organic pigments, disperse dyes, direct dyes, reactive dyes, cationic dyes and acid dyes. The substrates are colored by the coloring methods suited to them. Of these coloring materials, preferred are dyes or pigments having good light fastness, weather resistance and chemical resistance.

The method for supporting the insect growth regulator on the substrate is selected by considering the properties of the substrate and either the liquid IGR, the solution of the liquid IGR or the solution of the solid IGR. When the substrate is paper or cloth, methods such as coating, printing, spraying and immersing are usually selected. When the substrate is resin, rubber, glass or plate, methods such as kneading-extrusion molding, spraying and multi-layer sheet molding are selected.

The amount of IGR carried on the substrate varies with the kind of the ingredients carried on the substrate and the kind, form, size and thickness of the substrate. Generally, the amount of IGR is within the range of from 0.00001 to 500 mg/cm$^2$.

When the substrate on which the IGR is to be supported is made of a synthetic resin, the material for controlling pests of the present invention can be manufactured by forming the resin into a molded product by the following method before use:

An IGR, a coloring material producing a color having properties of attracting pests and optional additives are added to the synthetic resin to prepare a pest-controlling resin composition; the pest-controlling resin composition is then heat-kneaded and pelletized to obtain a master batch; and the master batch is molded, with a usually used molding machine (e.g. injection molding machine and extruder), into various forms such as films, sheets, net-like molded articles, rod-like molded articles and other articles used for agricultural and horticultural use (e.g. flower pots, poles for use in horticulture and cheesecloths).

Specifically:

(1) A pest-controlling film is obtained by heat-molding a synthetic resin composition containing 0.1 to 5% by weight of an insect growth regulator into a film having a thickness between 0.02 mm and 0.5 mm.

(2) A pest-controlling sheet is obtained by heat-molding a synthetic resin composition containing 0.05 to 10% by weight of an insect growth regulator into a sheet having a thickness between 0.5 mm and 5 mm.

(3) A pest-controlling molded article is obtained by heat-molding a synthetic resin composition containing 0.05 to 10% by weight of an insect growth regulator into a net-like molded article containing fibers having a diameter between 0.05 mm and 5 mm.

An appropriate number of the materials for controlling pests of the present invention are set for controlling pests that damage agricultural crops (e.g. vegetables, cotton, flowering plants, tea, fruit trees and mushrooms) at appropriate intervals. Although the number of the materials set and the intervals at which the materials are set vary depending upon the kinds of the insect growth regulator and target pest and the degree of damage, the materials are usually set according to the following methods:

(1) A method of setting the material in the vicinity of the upper growth point of a plant so that the material is held along the horizontal direction to the ground and the surface of the material is held horizontally or perpendicularly to the ground.

(2) A method of setting the materials at an optional height between the growing point and base of a plant so that the material is held along the horizontal direction to the ground and the surface of the material is held horizontally or perpendicularly to the ground.

(3) A method of setting the material at the upper part or central part of a plant so that the material is held along the perpendicular direction to the ground.

(4) A method of setting the material on the surface of the ground in which a plant is cultivated.

(5) A method of setting the material on the plane surface of a wall or the like in the vicinity of a place where a plant is cultivated.

(6) A method of setting the material having the same shape as an optional agricultural instrument used for cultivating plants in the same manner as is used the instrument.

(7) A method of setting the material in a closed cultivation place such as greenhouse at the points or passages through which pests of the outside would enter the inside of the cultivation place.

The number of the materials set and the intervals at which the materials are set vary depending upon the kind of IGR, when, where and how the materials are set, the kind of target pest and the degree of damage. However, they are usually selected so that the dosage of IGR falls within the range of from 1 to 5,000 g/hectare, preferably 10 to 500 g/hectare.

Pests are attracted to the color of the material for controlling pests of the present invention. They come into contact with the material. Then, the IGR contained in the material is adsorbed by or adheres to the pests. As a result, the pests are sterilized. Also a male pest attracted to the material passes the IGR adsorbed thereby or adhered thereto to female pests by the contact and copulation with the female pests. As a result, the females not attracted to the material also can be sterilized.

The present invention is illustrated in more detail with reference to the following examples.

Production Example 1

0.4 Part of the insect growth regulator is dissolved in 40 parts of acetone, and 31 ml of the resulting solution is absorbed in a yellow cloth of 21 cm x 92 cm in size. Acetone is then vaporized to obtain a material for controlling pests containing 0.16 mg/cm$^2$ of the active ingredient.

Production Example 2

0.4 Part of the insect growth regulator is dissolved in 40 parts of acetone and further 0.8 part of rape seed oil is added thereto. Thirty-one milliliters of the resulting solution is absorbed in a yellow cloth of 21 cm x 92 cm in size. Acetone is then vaporized to obtain a material for controlling pests containing 0.16 mg/cm$^2$ of the active ingredient.

Production Example 3

The same procedure as in Production Example 2 is repeated except that a blue cloth replaces the yellow cloth, to obtain a material for controlling pests containing 0.16 mg/cm$^2$ of the active ingredient.

Production Example 4

Five parts of the insect growth regulator is dissolved in 65 parts of a vegetable oil, and then 20 parts of a mineral oil and 10 parts of a surface active agent are added thereto and mixed. The resulting solution is applied to a roll of yellow Kent paper of 50 cm in width and 2,000 m in length by gravure printing to obtain a material for controlling pests containing 5 g/m$^2$ of the active ingredient.

Production Example 5

One part of the insect growth regulator is dissolved in 99 parts of acetone. One hundred grams of the resulting solution is spray-coated onto a square yellow Kent paper having a side of 100 cm to obtain a material for controlling pests containing 1 g/m$^2$ of the active ingredient.

Production Example 6

Five parts of the insect growth regulator is dissolved in 65 parts of a vegetable oil, and then 20 parts of a mineral oil and 10 parts of a surface active agent are added thereto and mixed. 2.25 Grams of the resulting solution is absorbed in a square yellow Kent paper having a side of 15 cm to obtain a material for controlling pests containing 5 g/m$^2$ of the active ingredient.

Production Example 7

0.01 Part of the insect growth regulator is dissolved in 99.99 parts of a vegetable oil. The resulting solution is applied to a roll of yellow Kent paper of 50 cm in width and 2,000 m in length by gravure printing to obtain material for controlling pests containing 0.01 g/m$^2$ of the active ingredient.

Production Example 8

Ten parts of the insect growth regulator is dissolved in 90 parts of a mineral oil. 0.225 Gram of the resulting solution is absorbed in a square yellow Kent paper having a side of 15 cm to obtain a material for controlling pests containing 1 g/m$^2$ of the active ingredient.

Production Example 9

Ninety-eight parts by weight of a polyethylene resin (Sumikathene®; a registered trade mark of Sumitomo Chemical Co., Ltd.), 1 part by weight of pyriproxyfen, a juvenile hormone-like compound, and 1 part by weight of a polyethylene colored master batch for yellow coloration (SPEM 305 produced by Sumika Color Co., pigment content: 12 wt.%) are kneaded with a pressure kneader and then pelletized.

The resulting pellet is extruded through an extruder equipped with a T-dies at 160° to 180°C to obtain a sheet-form material for controlling pests of 1 mm in thickness.

Production Example 10

The same procedure as in Production Example 9 is repeated except that a colored master batch for blue coloration (SPEM 510 produced by Sumika Color Co.; pigment content: 12 wt.%) replaces the colored master batch for yellow coloration. Thus, a sheet-form material for controlling pests is obtained.

Production Example 11

Ninety-seven parts by weight of a polyethylene resin (Sumikathene®; a registered trade mark of Sumitomo Chemical Co., Ltd.), 1 part by weight of pyriproxyfen, a juvenile hormone-like compound, 1 part by weight of a polyethylene colored master batch for yellow coloration (SPEM 305 produced by Sumika Color Co., pigment content: 12 wt.%) and 1 part by weight of a rape seed oil, an edible oil, are kneaded with a pressure kneader and then pelletized.

The resulting pellet is extruded through an extruder equipped with a T-dies at 160° to 180°C to obtain a sheet-form material for controlling pests of 1 mm in thickness.

Test Example 1

A material for controlling pests with pyriproxyfen as insect growth regulator was prepared according to Production Example 2. It was set at the same height as that of a container (80 cm x 112 cm x 45 cm) in which tomato having greenhouse whiteflies parasitized thereon had been planted.

On the other hand, a yellow cloth containing no insect growth regulator was set as a control at a distance of about 8 m.

On the predetermined day, the number of greenhouse whitefly adults parasitized on the tomato was counted. The mean value per cup is shown in Table 1.

Table 1

| | Number of days elapsed after setting | | | | | | |
|---|---|---|---|---|---|---|---|
| | 0 | 7 | 14 | 18 | 28 | 35 | 42 |
| Treatment with pyriproxyfen | 102 | 82 | 82 | 53 | 18 | 12 | 5 |
| No treatment | 118 | 236 | 58 | 72 | 377 | 138 | 206 |

Test Example 2

In the same manner as in Test Example 1, the pest-controlling effect on sweetpotato whiteflies was examined. The results are shown in Table 2.

Table 2

| | Number of days elapsed after setting | | | | | |
|---|---|---|---|---|---|---|
| | 0 | 7 | 14 | 18 | 29 | 35 |
| Treatment with pyriproxyfen | 53 | 40 | 35 | 20 | 10 | 1 |
| No treatment | 40 | 60 | 120 | 188 | 315 | 390 |

Test Example 3

Soil was placed on the bottom of a glass vessel of 70 cm x 35 cm x 35 cm in size. Three cucumber seedlings, on which Thrips palmi had been parasitized, were planted at the central part of the glass vessel. After three days, a material for controlling pests with pyriproxyfen as insect growth regulator prepared according to Production Example 3 was formed into a size of 15 cm x 15 cm and set at a height of 5 cm above the ground. On the other hand, the same test was carried out using a blue cloth containing no insect growth regulator as a control.

On the predetermined day, the number of Thrips palmi adults parasitized on the cucumbers was counted. The tests were carried out in a room kept at 28° ±1°C. The results are shown in Table 3.

Table 3

| | Number of days elapsed after setting | | | |
|---|---|---|---|---|
| | 0 | 7 | 14 | 21 |
| Treatment with pyriproxyfen | 5 | 5 | 3 | 2 |
| No treatment | 8 | 10 | 20 | 35 |

6

Test Example 4

Materials for controlling pests containing pyriproxyfen in amounts of 5.3 mg/cm$^2$, 2.7 mg/cm$^2$ and 0.5 mg/cm$^2$, respectively, were prepared by dissolving the corresponding amounts of pyriproxyfen in a cotton seed oil and coating every solution thus obtained onto a yellow cloth of 15 cm x 15 cm in size to allow the cloth to absorb the solution. Every cloth was set on one wall surface of a nylon net cage (30 cm x 30 cm x 30 cm). Kidney bean planted in a pot was placed at the center of the cage, and sweetpotato whitefly adults were released in the cage. After 48 hours, the hatching inhibitory effect on eggs from the adults was examined. The results are shown in Table 4.

Table 4

|  | Pyriproxyfen (mg/cm$^2$) | Hatching inhibitory rate (%) |
|---|---|---|
| Treatment with pyriproxyfen | 5.3<br>2.7<br>0.5 | 94.6<br>98.2<br>83.7 |
| No treatment | 0 | 10.1 |

Test Example 5

Twenty-four potted cabbages were arranged in two rows in a small-sized net room of 1 m x 2 m x 1.5 m in size. A material for controlling pests prepared according to Production Example 4 with pyriproxyfen (insect growth regulator), a cotton seed oil (vegetable oil), tetradecane (mineral oil) and Span 85® (surface active agent produced by ICI Americas Inc.) was formed into a size of 10 cm x 2 m. It was set at a height of 30 cm above the floor surface between the rows of cabbages. Eight hundred adults of sweetpotato whitefly were released in the net room. After 1 month, the number of larvae parasitized on five randomly selected cabbages was counted.

The results are shown in Table 5.

Table 5

|  | Number of larvae |
|---|---|
| Treatment with pyriproxyfen | 192 |
| No treatment | 2184 |

Test Example 6

A material for controlling pests with pyriproxyfen as insect growth regulator prepared according to Production Example 5 was formed into a size of 15 cm x 15 cm. It was set on one wall surface of a nylon net cage of 30 cm x 30 cm x 30 cm in size. About 100 adults of sweetpotato whitefly were released in the cage together with kidney bean on which the adults had been parasitized. One day after release of the adults, a potted kidney bean having no adults parasitized thereon was set in the cage for oviposition. Among the eggs laid on the potted kidney bean until the next day, the number of unhatched eggs was counted. The hatching inhibitory rate was calculated according to the following equation.

$$\text{Hatching inhibitory rate (\%)} = \frac{\text{Number of unhatched eggs}}{\text{Number of laid eggs}} \times 100$$

The results are shown in Table 6.

Table 6

|  | Hatching inhibitory rate (%) |
|---|---|
| Treatment with pyriproxyfen | 99.0 |
| No treatment | 7.4 |

Test Example 7

The material for controlling pests containing pyriproxyfen (insect growth regulator), a cotton seed oil (vegetable oil), tetradecane (mineral oil) and Span 85® (surface active agent produced by ICI Americas Inc.) prepared according to Production Example 6 was formed into a size of 15 cm x 15 cm. It was set on one wall surface of a nylon net cage of 30 cm x 30 cm x 30 cm in size. About 100 adults of sweetpotato whitefly were released in the cage together with kidney bean on which the adults had been parasitized. One day after release of the adults, a potted kidney bean having no adults parasitized thereon was set in the cage for oviposition. Among the eggs laid on the potted kidney bean until the next day, the number of unhatched eggs was counted. The hatching inhibitory rate was calculated according to the following equation.

$$\text{Hatching inhibitory rate (\%)} = \frac{\text{Number of unhatched eggs}}{\text{Number of laid eggs}} \times 100$$

The results are shown in Table 7.

Table 7

|  | Hatching inhibitory rate (%) |
|---|---|
| Treatment with pyriproxyfen | 90.6 |
| No treatment | 5.3 |

Test Example 8

A material for controlling pests containing pyriproxyfen (insect growth regulator) and a cotton seed oil (vegetable oil) prepared according to Production Example 7 was formed into a size of 15 cm x 15 cm. It was set on one wall surface of a nylon net cage of 30 cm x 30 cm x 30 cm in size. About 100 adults of sweetpotato whitefly were released in the cage together with kidney bean on which the adults had been parasitized. One day after release of the adults, a potted kidney bean having no adults parasitized thereon was set in the cage for oviposition. Among the eggs laid on the potted kidney bean until the next day, the number of unhatched eggs was counted. The hatching inhibitory rate was calculated according to the following equation.

$$\text{Hatching inhibitory rate (\%)} = \frac{\text{Number of unhatched eggs}}{\text{Number of laid eggs}} \times 100$$

The results are shown in Table 8.

8

Table 8

|  | Hatching inhibitory rate (%) |
| --- | --- |
| Treatment with pyriproxyfen | 100 |
| No treatment | 1.6 |

Test Example 9

A material for controlling pests containing pyriproxyfen (insect growth regulator) and Solvesso 200 (mineral oil) prepared according to Production Example 8 was formed into a size of 15 cm x 15 cm. It was set on one wall surface of a nylon net cage of 30 cm x 30 cm x 30 cm in size. About 100 adults of sweetpotato whitefly were released in the cage together with kidney bean on which the adults had been parasitized. One day after release of the adults, a potted kidney bean having no adults parasitized thereon was set in the cage for oviposition. Among the eggs laid on the potted kidney bean until the next day, the number of untached eggs was counted. The hatching inhibitory rate was calculated according to the following equation.

$$\text{Hatching inhibitory rate (\%)} = \frac{\text{Number of unhatched eggs}}{\text{Number of laid eggs}} \times 100$$

The results are shown in Table 9.

Table 9

|  | Hatching inhibitory rate (%) |
| --- | --- |
| Treatment with pyriproxyfen | 98.2 |
| No treatment | 6.4 |

Test Example 10

A sheet-like material for controlling pests prepared according to Production Example 9 was formed into a size of 15 cm x 15 cm. It was set at the same height as that of a container (80 cm x 112 cm x 45 cm) in which tomato having greenhouse whiteflies parasitized thereon had been planted.

On the other hand, a yellow film containing no insect growth regulator was set as a control in the same manner as in setting the above material for controlling pests.

On the predetermined day, the number of greenhouse whitefly adults parasitized on the tomato was counted.

The mean value per cup is shown in Table 10.

Table 10

|  | Number of days elapsed after setting | | | | | | |
| --- | --- | --- | --- | --- | --- | --- | --- |
|  | 0 | 7 | 14 | 18 | 28 | 35 | 42 |
| Treatment with pyriproxyfen | 105 | 78 | 75 | 50 | 20 | 10 | 3 |
| No treatment | 101 | 221 | 70 | 83 | 365 | 234 | 257 |

Test Example 11

In the same manner as in Test Example 10, the pest-controlling effect on sweetpotato whiteflies was examined. The results are shown in Table 11.

Table 11

|  | Number of days elapsed after setting | | | | | |
|---|---|---|---|---|---|---|
|  | 0 | 7 | 14 | 18 | 29 | 35 |
| Treatment with pyriproxyfen | 70 | 30 | 20 | 18 | 8 | 5 |
| No treatment | 65 | 70 | 110 | 191 | 268 | 360 |

Test Example 12

Soil was placed on the bottom of a glass vessel of 70 cm x 35 cm x 35 cm in size. Three cucumber seedings, on which Thrips palmi had been parasitized, were planted at the central part of the glass vessel. After three days, the material for controlling pests prepared according to Production Example 10 was formed into a size of 15 cm x 15 cm and set at a height of 5 cm above the ground. On the other hand, the same test was carried out by setting a blue film containing no insect growth regulator, a control, in the same manner as in setting the above material for controlling pests.

On the predetermined day, the number of Thrips palmi adults parasitized on the cucumbers was counted. The tests were carried out in a room kept at 28° ±1°C. The results are shown in Table 12.

Table 12

|  | Number of days elapsed after setting | | | |
|---|---|---|---|---|
|  | 0 | 7 | 14 | 21 |
| Treatment with pyriproxyfen | 3 | 4 | 3 | 2 |
| No treatment | 4 | 8 | 25 | 31 |

**Claims**

1. A material for controlling pests which comprises a substrate which is colored to a color having properties of attracting pests and contains an insect growth regulator.

2. The material of claim 1, wherein the color having properties of attracting pests is a color selected from the group consisting of yellow, greenish yellow, yellow green, yellowish green, green, bluish green, blue green, greenish blue, blue and purplish blue.

3. The material of claim 1, wherein the color having properties of attracting pests is yellow or greenish yellow.

4. The material of claim 1, wherein the insect growth regulator is a juvenile hormone-like compound.

5. The material of claim 1, wherein the insect growth regulator is a chitin synthesis inhibitor.

6. The material of claim 1, wherein the insect growth regulator is pyriproxyfen.

7. The material of claim 1, wherein the color having properties of attracting pests is yellow or greenish yellow and the insect growth regulator is pyriproxyfen.

8. A method for controlling pests which comprises setting a material according to any one of claims 1 to 7 in a locus where pests live.

9. The method of claim 8 using the material of claim 7, wherein the pest is whitefly.

10. The method of claim 8, which includes the steps of selecting blue as the color having properties of attracting pests and selecting pyriproxyfen as the insect growth regulator.

11. The method of claim 10, wherein the pest is thrips.

European Patent
Office

EUROPEAN SEARCH REPORT

Application Number

EP    92 12 1826
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CENTRAL PATENTS INDEX, BASIC ABSTRACTS JOURNAL Section Ch, Week 8422, 25 July 1984 Derwent Publications Ltd., London, GB; Class C, AN 134059 & AU-A-8 319 917 (F.A.NORMAN) 12 April 1984 * abstract * | 1-11 | A01N61/00 |
| Y | GB-A-2 231 798 (SUMITOMO CHEMICAL COMPANY LIMITED) *whole document* | 1-11 | |
| A | CHEMICAL PATENTS INDEX, DOCUMENTATION ABSTRACTS JOURNAL Section Ch, Week 8944, 3 January 1990 Derwent Publications Ltd., London, GB; Class C, AN 319041 & JP-A-01 235 532 (NITTO DENKO CORP) 20 September 1989 * abstract * | | |
| A | CHEMICAL PATENTS INDEX, DOCUMENTATION ABSTRACTS JOURNAL Section Ch, Week 9045, 16 January 1991 Derwent Publications Ltd., London, GB; Class C, AN 339200 & JP-A-02 245 132 (NITTO DENKO CORP) 28 September 1990 * abstract * | | **TECHNICAL FIELDS SEARCHED (Int. Cl.5)** A01N |
| A | CENTRAL PATENTS INDEX, BASIC ABSTRACTS JOURNAL Section Ch, Week 8143, 16 December 1981 Derwent Publications Ltd., London, GB; Class C, AN 78643 & JP-A-56 115 706 (SHOWA DENKO KK) 11 September 1981 * abstract * | | |

The present search report has been drawn up for all claims

| Place of search | Date of completion of the search | Examiner |
|---|---|---|
| THE HAGUE | 01 APRIL 1993 | DONOVAN T.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)

European Patent Office

**EUROPEAN SEARCH REPORT**

Application Number

EP    92 12 1826
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL OF ECONOMIC ENTOMOLOGY vol. 79, no. 1, February 1986, COLLEGE PARK, MARYLAND US pages 84 - 86 T.L.LADD AND M.G.KLEIN 'Japanese Beetle (Coleoptera: Scarabaeidae) Response to Color Traps Baited with Phenethyl Propionate + Eugenol + Geraniol (3:7:3) and Japonilure' | | |
| A | EP-A-0 229 191 (EARTH CHEMICAL CO., LTD) | | |

TECHNICAL FIELDS SEARCHED (Int. Cl.5)

The present search report has been drawn up for all claims

| Place of search | Date of completion of the search | Examiner |
|---|---|---|
| THE HAGUE | 01 APRIL 1993 | DONOVAN T.M. |

EPO FORM 1503 03.82 (P0401)